# FASCICULE DE BREVET EUROPEEN

(11) **EP 0 381 595 B1**
(45) Date de publication et mention de la délivrance du brevet: **19.05.1993**
(21) Numéro de dépôt: 90420041.7
(22) Date de dépôt: 29.01.1990
(51) Int. Cl.: B23H 7/08

(54) **Electrode filiforme à revêtement métallique pour étincelage érosif, et procédé pour sa réalisation**
Drahtförmige Elektrode mit metallischer Beschichtung für Funkenerosion und Verfahren zu ihrer Herstellung
Wiry electrode with a metallic coating for spark erosion, and its manufacturing process

(30) Priorité: 01.02.1989 FR 8901569; 27.11.1989 FR 8916002
(43) Date de publication de la demande: 08.08.1990
(73) Titulaire: THERMO COMPACT (société anonyme), F-74370 Metz Tessy (FR)
(72) Inventeur: Derobert, Pierre, CH-1208 Genève (CH); Lacourcelle, Louis, FR-74570 Groisy (FR)
(74) Mandataire: de Beaumont, Michel

(56) Documents cités:
- EP-A- 0 415 501
- JP-A-62 213 924
- PATENT ABSTRACTS OF JAPAN vol. 8, no. 100 (M-295)(1537) 11 mai 1984, & JP-A-59 14429 (SUMITOMO) 25 janvier 1984
- PATENT ABSTRACTS OF JAPAN vol. 9, no. 164 (M-395)(1887) 10 juillet 1985, & JP-A-60 39030 (INOUE JAPAX) 28 février 1985

## Description

### Description pour les Etats contractants : SE, BE, LU, ES, GR, DK

La présente invention concerne une électrode en forme de fil que l'on utilise dans l'usinage de pièces métalliques par électroérosion, ainsi qu'un procédé pour sa réalisation.

Dans un tel usinage, décrit par exemple dans le document FR-A-2 418 699, une électrode en forme de fil est entraînée selon une trajectoire à proximité d'une pièce métallique à usiner. Un générateur électrique produit une différence de potentiel entre la pièce métallique à usiner et le fil métallique formant l'électrode. Un étincelage se produit dans la zone d'usinage comprise entre le fil formant l'électrode et la pièce métallique, et érode progressivement la pièce.

La vitesse d'érosion de la pièce mécanique que l'on peut obtenir dépend d'un grand nombre de paramètres, et notamment du générateur électrique, de la distance d'étincelage, du fluide d'usinage présent dans la zone d'étincelage. Cependant, on a pu constater que la rapidité d'érosion dépend également de la nature des matériaux constituant l'électrode en forme de fil.

Le document CH-A-646 083 mentionne la possibilité de réaliser une électrode en fil pour étincelage érosif en prévoyant une âme bonne conductrice, en acier ou en cuivre, revêtue d'une couche d'alliage à base de zinc. La présence de zinc permet de limiter la température superficielle de l'électrode lors de l'étincelage, par le fait que le zinc a une température d'évaporation relativement basse. Il en résulte un plus faible échauffement de l'âme dans la zone d'étincelage, ce qui réduit les risques de rupture.

Le document CH-A-646 083 enseigne également d'introduire dans l'enrobage contenant du zinc une quantité de nickel dont l'effet est d'augmenter la résistivité électrique de l'enrobage et donc de diminuer sa conductivité thermique ; il en résulte que l'enrobage isole thermiquement l'âme métallique dans la zone d'étincelage, et diminue son échauffement, ce qui diminue également les risques de rupture.

Le document JP-A-62 213924 décrit une électrode en forme de fil pour usinage par étincelage érosif, comprenant une âme métallique en cuivre ou alliage de cuivre présentant une composition sensiblement constante et homogène selon toute sa section, jusqu'à son interface de liaison avec l'enrobage métallique, l'âme étant dépourvue de zone de diffusion des métaux à l'interface avec l'enrobage, ladite électrode étant dépourvue de couche barrière à l'interface entre l'âme métallique et l'enrobage métallique.

Le document EP-A-0 415 501 appartient à l'état de la technique visé à l'article 54 (3) CBE. Il décrit une structure d'électrode à âme métallique revêtue d'une superposition de plusieurs couches non diffusées de métaux ou d'alliages différents susceptibles de diffuser les unes dans les autres lors de l'étincelage. Par suite de l'existence de ce document, des revendications séparées plus limitées ont été présentées pour l'Autriche, la Suisse, l'Allemagne, la France, le Royaume-Uni, l'Italie, le Liechtenstein et les Pays-Bas.

Ces techniques connues, tendant à diminuer les risques de rupture, sont toutefois insuffisantes pour réaliser des fils pour électroérosion dont le diamètre est faible, par exemple inférieur à 0,30 millimètres. Pour les diamètres faibles, on constate en effet que la tendance à la rupture des fils augmente sensiblement, de manière apparemment plus importante que la diminution du diamètre.

Or les techniques modernes d'électroérosion, notamment pour obtenir une plus grande précision d'usinage, nécessitent l'emploi d'électrodes filiformes dont le diamètre est le plus réduit possible.

Partant de ces observations, la présente invention se propose de réaliser une électrode filiforme pour électroérosion avec laquelle les risques de rupture sont sensiblement réduits, permettant d'augmenter sensiblement la vitesse et la précision d'érosion d'une pièce métallique, les autres paramètres d'électroérosion étant maintenus constants.

Il apparaît tout d'abord que, avec certaines électrodes filiformes obtenues par les procédés décrits dans les documents ci-dessus , la conductivité électrique de l'âme est détériorée lors de la réalisation de l'enrobage, et cette détérioration est d'autant plus sensible lorsque l'âme présente un diamètre relativement faible, c'est-à-dire lorsque l'électrode présente un diamètre inférieur à 0,30 millimètres.

L'invention réside notamment dans le fait d'avoir démontré que les ruptures d'électrodes à âme métallique recouverte d'un enrobage à base de zinc obtenues par certains procédés connus résultent de la dégradation de la conductivité électrique de l'âme lors de la réalisation de l'enrobage.

L'invention repose en outre sur la constatation surprenante d'une diminution sensible des risques de rupture mécanique de l'électrode lorsque celle-ci comprend un enrobage multicouche non diffusé.

L'invention a ainsi pour objet de proposer une nouvelle structure d'électrode en forme de fil selon la revendication 1, et un procédé pour sa réalisation selon la revendication 7, dans laquelle l'âme métallique est bonne conductrice de l'électricité, et sa conductivité n'est pas diminuée par la présence de l'enrobage périphérique à base de zinc ou d'un autre métal. Selon l'invention, l'enrobage est réalisé autour d'une âme métallique bonne conductrice de l'électricité sans dégrader l'âme, et comprend une structure multicouche non diffusée qui permet de réduire encore l'échauffement de l'âme lors de l'étincelage.

Selon un autre aspect de l'invention, l'électrode filiforme doit permettre la réalisation d'usinages par étincelage érosif produisant des états de surfaces les plus réguliers possibles, sur la pièce usinée.

Pour cela, l'invention résulte de l'observation suivante : lors de l'électroérosion, des gouttes de métal en fusion restent provisoirement attachées à l'électrode, puis se détachent de l'électrode, dans la zone d'étincelage. La présence des gouttes de métal en fusion sur l'électrode dans la zone d'étincelage modifie la géométrie de l'électrode, et modifie également le régime d'étincelage. Ces modifications introduisent des irrégularités, en fonction de la production irrégulière de gouttes de métal en fusion, et induisent des irrégularités de surface de la pièce usinée.

Partant de cette observation, l'invention propose d'améliorer la qualité de surface usinée obtenue en favorisant l'évacuation des gouttes de métal en fusion, évitant qu'elles restent attachées à l'électrode dans la zone d'étincelage.

L'invention a également pour objet de proposer un procédé de fabrication d'une telle électrode en forme de fil, ce procédé permettant de contrôler de manière très précise les différents paramètres de l'électrode. En particulier, l'électrode selon l'invention est formée d'un fil d'âme métallique, le fil d'âme étant recouvert d'un dépôt électrolytique superficiel d'alliage de cuivre. Le procédé permet de contrôler de manière très efficace et précise l'épaisseur du dépôt électrolytique superficiel d'alliage, la teneur en métal accompagnant le cuivre de ce dépôt électrolytique superficiel d'alliage, la composition et la structure de l'alliage dans l'épaisseur du dépôt électrolytique. Cette composition et cette structure peuvent être modulées à volonté dans l'épaisseur du dépôt électrolytique.

Selon un autre aspect de l'invention, le procédé permet d'obtenir un dépôt électrolytique superficiel d'alliage présentant une proportion en métal accompagnant le cuivre inférieure à 50 % en poids. On constate que les procédés connus de réalisation d'électrodes métalliques pour électro-érosion ne permettaient pas l'obtention d'une telle proportion de métal accompagnant, tel que le zinc, dans la couche superficielle de l'électrode.

Selon un autre aspect de l'invention, le procédé permet de réaliser de manière simple un enrobage multicouche composé d'un empilage de plusieurs couches très fines.

Pour atteindre ces objets ainsi que d'autres, la présente invention prévoit d'utiliser, pour l'électroérosion, une électrode constituée par un fil métallique comprenant une âme métallique, l'âme métallique étant enrobée d'un enrobage métallique.

Selon l'invention, l'âme métallique est en cuivre ou en alliage de cuivre, de façon à présenter une conductivité optimale, associée à une résistance mécanique suffisante ; l'âme métallique présente une composition sensiblement constante et homogène sur toute sa section, jusqu'à son interface de liaison avec l'enrobage métallique, l'âme étant dépourvue de zone de diffusion des métaux à l'interface avec l'enrobage. La composition sensiblement constante et homogène de l'âme, sur toute sa section, garantit l'obtention d'une conductivité électrique optimale, malgré la présence d'un enrobage métallique entourant l'âme. L'interface entre l'âme et l'enrobage est nette.

Selon l'invention, l'enrobage comprend plusieurs couches de métaux ou d'alliages différents, susceptibles de se combiner entre elles lors de la fusion pour former un alliage commun. Cette caractéristique est contraire à l'enseignement des documents antérieurs, qui préconisent une étape d'échauffement pour diffusion des couches d'enrobage les unes dans les autres. De manière surprenante, l'invention met en évidence une diminution sensible des risques de rupture mécanique de l'électrode filiforme présentant un tel enrobage multicouche non diffusé. Il est probable que la combinaison des différentes couches formant l'enrobage, pour constituer un alliage commun lors de la fusion, tend à réduire l'échauffement de l'âme, et tend donc à réduire ses risques de ruptures.

L'enrobage est réalisé par dépôt à froid, sur une âme en cuivre ou alliage de cuivre, d'au moins une couche de métal ou d'alliage constituant l'enrobage définitif, à l'exclusion de toute opération ultérieure d'échauffement susceptible de produire une diffusion des métaux entre l'enrobage et l'âme. Ainsi, le procédé se distingue des procédés utilisés dans les techniques antérieures de réalisation d'enrobage à base d'alliage de zinc, procédés antérieurs dans lesquels on préconise une étape d'échauffement de l'électrode pour assurer une diffusion des couches métalliques composant l'enrobage les unes dans les autres. Par une telle étape, des atomes de métal composant l'enrobage sont diffusés à l'intérieur de l'âme, et réduisent sensiblement sa conductivité électrique.

L'enrobage comprend avantageusement un dépôt électrolytique d'alliage de cuivre et de métal accompagnant le cuivre.

Selon un mode de réalisation, la proportion de métal accompagnant le cuivre contenue dans le dépôt électrolytique est inférieure à 50 % en poids.

Selon un mode de réalisation, l'enrobage selon l'invention comprend une couche superficielle constituée de l'un au moins des métaux du groupe constitué par le fer, le nickel, le chrome, le cobalt. Cette couche superficielle réduit sensiblement l'adhérence des gouttes de métal en fusion, qui se détachent rapidement de l'enrobage dans la zone d'étincelage.

D'autres objets, caractéristiques et avantages de la présente invention ressortiront de la description suivante de modes de réalisation particuliers, faite en relation avec les figures jointes, parmi lesquelles :
- la figure 1 représente schématiquement une installation d'électroérosion utilisant une électrode selon la présente invention ;
- la figure 2 représente schématiquement en coupe transversale une électrode selon la présente invention, sans distinguer les différentes couches formant l'enrobage ;
- la figure 4 représente schématiquement en coupe transversale une électrode selon l'invention, en distinguant les différentes couches formant l'enrobage ; et
- la figure 5 illustre un autre mode de réalisation d'électrode selon l'invention.

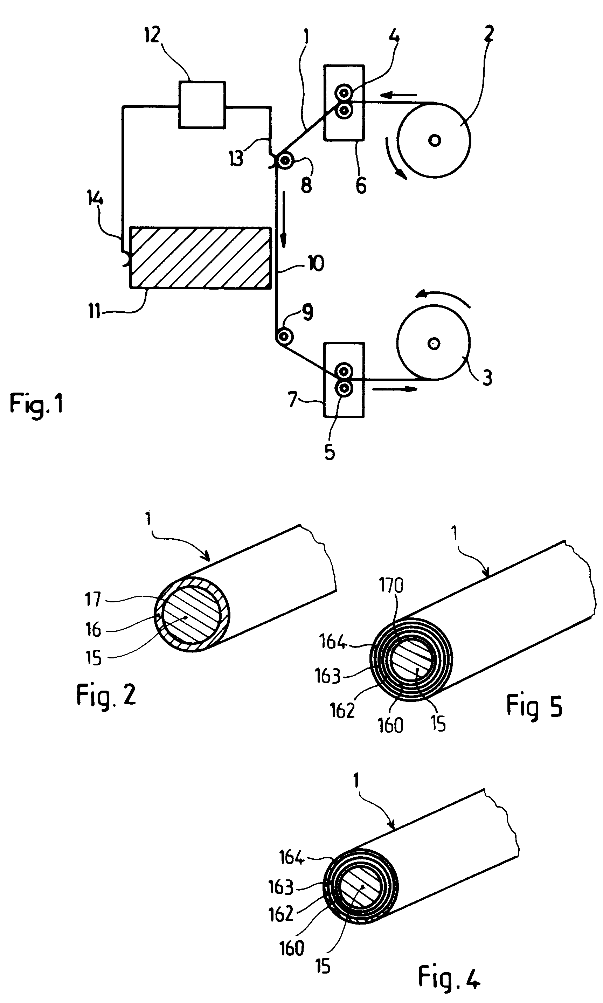

Comme le représente la figure 1, une installation d'électroérosion à électrode en forme de fil comprend généralement une électrode 1 en forme de fil que l'on déplace selon une trajectoire prédéterminée. L'électrode 1 en forme de fil se dévide hors d'une réserve de fil 2, et est récupérée sur une bobine de récupération 3 après l'usinage. Entre la réserve 2 et la bobine de récupération 3, l'électrode 1 suit un parcours schématiquement représenté, au cours duquel elle est entraînée par des galets d'entraînement 4 et 5 sollicités par des moteurs 6 et 7, et elle est guidée par des organes de guidage tels que les galets 8 et 9. Entre les galets 8 et 9, l'électrode 1 passe dans la zone d'usinage 10, zone dans laquelle elle est en regard d'une pièce 11 à usiner. Un générateur d'impulsions électriques 12 est connecté par des électrodes appropriées 13 et 14 entre d'une part l'électrode en forme de fil 1 et la pièce à usiner 11. Les impulsions électriques produites par le générateur d'impulsions électriques 12 produisent un étincelage dans la zone d'usinage 10, entre la pièce à usiner 11 et l'électrode 1. Cet étincelage produit l'érosion progressive de la pièce 11, érosion qui peut être poursuivie à volonté par déplacement relatif de la pièce 11 et de la portion d'électrode 1 comprise entre les galets 8 et 9.

On a représenté sur la figure 2, à plus grande échelle, l'électrode 1 en forme de fil selon la présente invention. L'électrode comprend une âme 15 métallique, constituée avantageusement de cuivre ou d'un alliage cuivre-zinc, ou de tout autre métal approprié, bon conducteur de l'électricité et présentant une résistance mécanique suffisante. L'âme métallique 15 est enrobée d'un enrobage métallique 16 multicouche, l'âme 15 et l'enrobage 16 étant en contact l'un de l'autre selon une interface 17 nette. Selon toute sa section, jusqu'à son interface de liaison 17 avec l'enrobage métallique, l'âme 15 est dépourvue de zone de diffusion des métaux constituant l'enrobage 16.

L'enrobage 16 est constitué avantageusement à base d'alliage électrolytique de cuivre.

L'enrobage 16 contient avantageusement du zinc, dont la présence réduit l'échauffement de l'âme dans la zone d'étincelage.

L'enrobage 16 peut également contenir avantageusement du nickel, par exemple un alliage ternaire de cuivre, de zinc et de nickel, ou un alliage de cuivre et de nickel.

Dans le mode de réalisation de la figure 4, l'enrobage 16 comprend une pluralité de couches de métaux ou d'alliages différents susceptibles de se combiner entre elles lors de l'étincelle pour former un alliage commun. Par exemple, on peut utiliser une première couche interne 160 en alliage de cuivre et de nickel, une seconde couche 162 en cuivre, une troisième couche 163 en zinc, une quatrième couche 164 en un autre métal ou alliage.

Dans les deux modes de réalisation des figures 4 et 5, la couche superficielle 164 peut être constituée de l'un au moins des métaux du groupe constitué par le fer, le nickel, le cobalt, le chrome. La couche superficielle 164 peut être très mince, son épaisseur pouvant par exemple être d'environ 1 micron.

Pour l'obtention d'une électrode filiforme selon l'invention, on doit utiliser un procédé d'enrobage à froid d'une âme 15 en cuivre ou alliage de cuivre bonne conductrice de l'électricité. L'enrobage est réalisé par dépôt à froid de couches de métal ou d'alliage constituant l'enrobage définitif, et il faut éviter toute opération ultérieure d'échauffement de l'électrode. La désignation "dépôt à froid" signifie que le dépôt est effectué à une température suffisamment basse pour que les diffusions de métaux d'une couche à l'autre d'âme ou d'enrobage soient négligeables. Tel est le cas d'un dépôt intervenant à une température inférieure à 100 ° C.

Une amélioration des résultats a été constatée dans le cas où la proportion de métal accompagnant le cuivre contenue dans l'enrobage 16 est inférieure à 50 % en poids de l'enrobage.

Les couches d'enrobage peuvent être réalisées par dépôt chimique, ou peuvent être réalisées par dépôt électrolytique. Le dépôt électrolytique peut être préféré en particulier dans les modes de réalisation dans lesquels on veut contrôler la composition de l'enrobage.

Ainsi, pour réaliser une telle électrode selon la figure 2, on peut avantageusement faire passer un fil d'âme 15, par exemple en cuivre ou alliage de cuivre-zinc, dans un bain de galvanoplastie pour produire le dépôt électrolytique d'une couche de l'enrobage superficiel 16 en alliage de cuivre, selon une épaisseur et une teneur appropriées en métal accompagnant le cuivre.

Une première possibilité consiste à déposer directement un alliage de cuivre-zinc.

Une autre possibilité consiste à réaliser un co-dépôt des deux métaux cuivre et zinc sur l'âme 15.

Selon une variante avantageuse du procédé de l'invention, pendant l'étape de formation du dépôt électrolytique superficiel d'alliage sur l'âme 15, on fait varier de manière appropriée les paramètres électriques de l'opération de galvanoplastie en fonction du temps. De telles variations induisent une modulation dans la composition et dans la structure du dépôt d'alliage dans l'épaisseur de l'enrobage.

En particulier, on peut avantageusement faire passer dans le bain de galvanoplastie, entre les électrodes, un courant électrique de forme pulsée. La composition et la structure du dépôt d'alliage peuvent être modulées par réglage des paramètres de forme d'onde, tels que fréquence et rapport cyclique du courant électrique pulsé.

Selon l'invention, on cherche à réaliser un enrobage constitué d'un empilage de couches de métaux ou d'alliages différents. Les couches sont destinées à se combiner lors de l'étincelle électroérosive. Pour augmenter la rapidité de combinaison des couches lors de l'étincelle, on peut augmenter le nombre des couches formant l'enrobage, et diminuer simultanément leur épaisseur. L'invention permet de faciliter la réalisation d'un tel enrobage multicouche à couches nombreuses et fines. En effet, le dépôt chimique par déplacement, qui est le type de dépôt chimique approprié pour le dépôt des types de métaux ou d'alliages constituant l'enrobage selon l'invention, ne permet pas à lui-seul de réaliser des couches dont l'épaisseur est supérieure à un micron. Par ailleurs, la mise en oeuvre d'un dépôt électrolytique est plus complexe.

L'invention permet de surmonter ces difficultés en réalisant l'enrobage par une succession de dépôts électrolytiques et de dépôts chimiques effectués en alternance. Ainsi, on réalise par exemple une première couche de deux microns d'épaisseur par dépôt électrolytique, par passage dans un bain électrolytique ; on réalise ensuite un déplacement d'une partie du métal de la première couche et son remplacement par une seconde couche différente de un micron d'épaisseur maximum ; de même, on réalise une troisième couche par dépôt électrolytique, puis une quatrième couche par dépôt chimique et ainsi de suite.

On peut également utiliser une étape ultérieure de mise à dimension, par passage de l'électrode dans une filière. On obtient ainsi une électrode de diamètre parfaitement déterminé.

La présente invention n'est pas limitée aux modes de réalisation qui ont été explicitement décrits, mais elle en inclut les diverses variantes et généralisations contenues dans le domaine des revendications ci-après.

### Description pour les Etats contractants: AT, CH, DE, FR, GB, IT, LI, NL

La présente invention concerne une électrode en forme de fil que l'on utilise dans l'usinage de pièces métalliques par électroérosion, ainsi qu'un procédé pour sa réalisation.

Dans un tel usinage, décrit par exemple dans le document FR-A-2 418 699, une électrode en forme de fil est entraînée selon une trajectoire à proximité d'une pièce métallique à usiner. Un générateur électrique produit une différence de potentiel entre la pièce métallique à usiner et le fil métallique formant l'électrode. Un étincelage se produit dans la zone d'usinage comprise entre le fil formant l'électrode et la pièce métallique, et érode progressivement la pièce.

La vitesse d'érosion de la pièce mécanique que l'on peut obtenir dépend d'un grand nombre de paramètres, et notamment du générateur électrique, de la distance d'étincelage, du fluide d'usinage présent dans la zone d'étincelage. Cependant, on a pu constater que la rapidité d'érosion dépend également de la nature des matériaux constituant l'électrode en forme de fil.

Le document CH-A-646 083 mentionne la possibilité de réaliser une électrode en fil pour étincelage érosif en prévoyant une âme bonne conductrice, en acier ou en cuivre, revêtue d'une couche d'alliage à base de zinc. La présence de zinc permet de limiter la température superficielle de l'électrode lors de l'étincelage, par le fait que le zinc a une température d'évaporation relativement basse. Il en résulte un plus faible échauffement de l'âme dans la zone d'étincelage, ce qui réduit les risques de rupture.

Le document CH-A-646 083 enseigne également d'introduire dans l'enrobage contenant du zinc une quantité de nickel dont l'effet est d'augmenter la résistivité électrique de l'enrobage et donc de diminuer sa conductivité thermique ; il en résulte que l'enrobage isole thermiquement l'âme métallique dans la zone d'étincelage, et diminue son échauffement, ce qui diminue également les risques de rupture.

Le document JP-A-62 213924 décrit une électrode en forme de fil pour usinage par étincelage érosif, comprenant une âme métallique en cuivre ou alliage de cuivre présentant une composition sensiblement constante et homogène selon toute sa section, jusqu'à son interface de liaison avec l'enrobage métallique, l'âme étant dépourvue de zone de diffusion des métaux à l'interface avec l'enrobage, ladite électrode étant dépourvue de couche barrière à l'interface entre l'âme métallique et l'enrobage métallique.

Le document EP-A-0 415 501 appartient à l'état de la technique visé à l'article 54 (3) CBE. Il décrit une structure d'électrode à âme métallique revêtue d'une superposition de plusieurs couches non diffusées de métaux ou d'alliages différents susceptibles de diffuser les unes dans les autres lors de l'étincelage. Par suite de l'existence de ce document, des revendications séparées plus limitées ont été présentées pour l'Autriche, la Suisse, l'Allemagne, la France, le Rogaume-Uni, l'Italie, le Liechtenstein et les Pays-Bas.

Ces techniques connues, tendant à diminuer les risques de rupture, sont toutefois insuffisantes pour réaliser des fils pour électroérosion dont le diamètre est faible, par exemple inférieur à 0,30 millimètres. Pour les diamètres faibles, on constate en effet que la tendance à la rupture des fils augmente sensiblement, de manière apparemment plus importante que la diminution du diamètre.

Or les techniques modernes d'électroérosion, notamment pour obtenir une plus grande précision d'usinage, nécessitent l'emploi d'électrodes filiformes dont le diamètre est le plus réduit possible.

Partant de ces observations, la présente invention se propose de réaliser une électrode filiforme pour électroérosion avec laquelle les risques de rupture sont sensiblement réduits, permettant d'augmenter sensiblement la vitesse et la précision d'érosion d'une pièce métallique, les autres paramètres d'électroérosion étant maintenus constants.

Il apparaît tout d'abord que, avec certaines électrodes filiformes obtenues par les procédés décrits dans les documents ci-dessus , la conductivité électrique de l'âme est détériorée lors de la réalisation de l'enrobage, et cette détérioration est d'autant plus sensible lorsque l'âme présente un diamètre relativement faible, c'est-à-dire lorsque l'électrode présente un diamètre inférieur à 0,30 millimètres.

L'invention réside notamment dans le fait d'avoir démontré que les ruptures d'électrodes à âme métallique recouverte d'un enrobage à base de zinc obtenues par certains procédés connus résultent de la dégradation de la conductivité électrique de l'âme lors de la réalisation de l'enrobage.

L'invention repose en outre sur la constatation surprenante d'une diminution sensible des risques de rupture mécanique de l'électrode lorsque celle-ci comprend un enrobage multicouche non diffusé.

L'invention a ainsi pour objet de proposer une nouvelle structure d'électrode en forme de fil selon la revendication 1, et un procédé pour sa réalisation selon la revendication 5, dans laquelle l'âme métallique est bonne conductrice de l'électricité, et sa conductivité n'est pas diminuée par la présence de l'enrobage périphérique à base de zinc ou d'un autre métal. Selon l'invention, l'enrobage est réalisé autour d'une âme métallique bonne conductrice de l'électricité sans dégrader l'âme, et comprend une structure multicouche non diffusée qui permet de réduire encore l'échauffement de l'âme lors de l'étincelage.

Selon un autre aspect de l'invention, l'électrode filiforme doit permettre la réalisation d'usinages par étincelage érosif produisant des états de surfaces les plus réguliers possibles, sur la pièce usinée.

Pour cela, l'invention résulte de l'observation suivante : lors de l'électroérosion, des gouttes de métal en fusion restent provisoirement attachées à l'électrode, puis se détachent de l'électrode, dans la zone d'étincelage. La présence des gouttes de métal en fusion sur l'électrode dans la zone d'étincelage modifie la géométrie de l'électrode, et modifie également le régie d'étincelage. Ces modifications introduisent des irrégularités, en fonction de la production irrégulière de gouttes de métal en fusion, et induisent des irrégularités de surface de la pièce usinée.

Partant de cette observation, l'invention propose d'améliorer la qualité de surface usinée obtenue en favorisant l'évacuation des gouttes de métal en fusion, évitant qu'elles restent attachées à l'électrode dans la zone d'étincelage.

L'invention a également pour objet de proposer un procédé de fabrication d'une telle électrode en forme de fil, ce procédé permettant de contrôler de manière très précise les différents paramètres de l'électrode. En particulier, l'électrode selon l'invention est formée d'un fil d'âme métallique, le fil d'âme étant recouvert d'un dépôt électrolytique superficiel d'alliage de cuivre. Le procédé permet de contrôler de manière très efficace et précise l'épaisseur du dépôt électrolytique superficiel d'alliage, la teneur en métal accompagnant le cuivre de ce dépôt électrolytique superficiel d'alliage, la composition et la structure de l'alliage dans l'épaisseur du dépôt électrolytique. Cette composition et cette structure peuvent être modulées à volonté dans l'épaisseur du dépôt électrolytique.

Le procédé selon l'invention, permet d'obtenir un dépôt électrolytique superficiel d'alliage présentant une proportion en métal accompagnant le cuivre inférieure à 50 % en poids. On constate que les procédés connus de réalisation d'électrodes métalliques pour électro-érosion ne permettaient pas l'obtention d'une telle proportion de métal accompagnant, tel que le zinc, dans la couche superficielle de l'électrode.

Selon un autre aspect de l'invention, le procédé permet de réaliser de manière simple un enrobage multicouche composé d'un empilage de plusieurs couches très fines.

Pour atteindre ces objets ainsi que d'autres, la présente invention prévoit d'utiliser, pour l'électroérosion, une électrode constituée par un fil métallique comprenant une âme métallique, l'âme métallique étant enrobée d'un enrobage métallique.

Selon l'invention, l'âme métallique est en cuivre ou en alliage de cuivre, de façon à présenter une conductivité optimale, associée à une résistance mécanique suffisante ; l'âme métallique présente une composition sensiblement constante et homogène sur toute sa section, jusqu'à son interface de liaison avec l'enrobage métallique, l'âme étant dépourvue de zone de diffusion des métaux à l'interface avec l'enrobage. La composition sensiblement constante et homogène de l'âme, sur toute sa section, garantit l'obtention d'une conductivité électrique optimale, malgré la présence d'un enrobage métallique entourant l'âme. L'interface entre l'âme et l'enrobage est nette.

Selon l'invention, l'enrobage comprend plusieurs couches de métaux ou d'alliages différents, susceptibles de se combiner entre elles lors de la fusion pour former un alliage commun. Cette caractéristique est contraire à l'enseignement des documents antérieurs, qui préconisent une étape d'échauffement pour diffusion des couches d'enrobage les unes dans les autres. De manière surprenante, l'invention met en évidence une diminution sensible des risques de rupture mécanique de l'électrode filiforme présentant un tel enrobage multicouche non diffusé. Il est probable que la combinaison des différentes couches formant l'enrobage, pour constituer un alliage commun lors de la fusion, tend à réduire l'échauffement de l'âme, et tend donc à réduire ses risques de ruptures.

L'enrobage est réalisé par dépôt à froid, sur une âme en cuivre ou alliage de cuivre, d'au moins une couche de métal ou d'alliage constituant l'enrobage définitif, à l'exclusion de toute opération ultérieure d'échauffement susceptible de produire une diffusion des métaux entre l'enrobage et l'âme. Ainsi, le procédé se distingue des procédés utilisés dans les techniques antérieures de réalisation d'enrobage à base d'alliage de zinc, procédés antérieurs dans lesquels on préconise une étape d'échauffement de l'électrode pour assurer une diffusion des couches métalliques composant l'enrobage les unes dans les autres. Par une telle étape, des atomes de métal composant l'enrobage sont diffusés à l'intérieur de l'âme, et réduisent sensiblement sa conductivité électrique.

L'enrobage comprend avantageusement un dépôt électrolytique d'alliage de cuivre et de métal accompagnant le cuivre.

La proportion de métal accompagnant le cuivre contenue dans le dépôt électrolytique est inférieure à 50 % en poids.

Selon un mode de réalisation, l'enrobage selon l'invention comprend une couche superficielle constituée de l'un au moins des métaux du groupe constitué par le fer, le nickel, le chrome, le cobalt. Cette couche superficielle réduit sensiblement l'adhérence des gouttes de métal en fusion, qui se détachent rapidement de l'enrobage dans la zone d'étincelage.

D'autres objets, caractéristiques et avantages de la présente invention ressortiront de la description suivante de modes de réalisation particuliers, faite en relation avec les figures jointes, parmi lesquelles :
- la figure 1 représente schématiquement une installation d'électroérosion utilisant une électrode selon la présente invention ;
- la figure 2 représente schématiquement en coupe transversale une électrode selon la présente invention, sans distinguer les différentes couches formant l'enrobage ;
- la figure 4 représente schématiquement en coupe transversale une électrode selon l'invention, en distinguant les différentes couches formant l'enrobage ; et
- la figure 5 illustre un autre mode de réalisation d'électrode selon l'invention.

Comme le représente la figure 1, une installation d'électroérosion à électrode en forme de fil comprend généralement une électrode 1 en forme de fil que l'on déplace selon une trajectoire prédéterminée. L'électrode 1 en forme de fil se dévide hors d'une réserve de fil 2, et est récupérée sur une bobine de récupération 3 après l'usinage. Entre la réserve 2 et la bobine de récupération 3, l'électrode 1 suit un parcours schématiquement représenté, au cours duquel elle est entraînée par des galets d'entraînement 4 et 5 sollicités par des moteurs 6 et 7, et elle est guidée par des organes de guidage tels que les galets 8 et 9. Entre les galets 8 et 9, l'électrode 1 passe dans la zone d'usinage 10, zone dans laquelle elle est en regard d'une pièce 11 à usiner. Un générateur d'impulsions électriques 12 est connecté par des électrodes appropriées 13 et 14 entre d'une part l'électrode en forme de fil 1 et la pièce à usiner 11. Les impulsions électriques produites par le générateur d'impulsions électriques 12 produisent un étincelage dans la zone d'usinage 10, entre la pièce à usiner 11 et l'électrode 1. Cet étincelage produit l'érosion progressive de la pièce 11, érosion qui peut être poursuivie à volonté par déplacement relatif de la pièce 11 et de la portion d'électrode 1 comprise entre les galets 8 et 9.

On a représenté sur la figure 2, à plus grande échelle, l'électrode 1 en forme de fil selon la présente invention. L'électrode comprend une âme 15 métallique, constituée avantageusement de cuivre ou d'un alliage cuivre-zinc, ou de tout autre métal approprié, bon conducteur de l'électricité et présentant une résistance mécanique suffisante. L'âme métallique 15 est enrobée d'un enrobage métallique 16 multicouche, l'âme 15 et l'enrobage 16 étant en contact l'un de l'autre selon une interface 17 nette. Selon toute sa section, jusqu'à son interface de liaison 17 avec l'enrobage métallique, l'âme 15 est dépourvue de zone de diffusion des métaux constituant l'enrobage 16.

L'enrobage 16 est constitué avantageusement à base d'alliage électrolytique de cuivre.

L'enrobage 16 contient avantageusement du zinc, dont la présence réduit l'échauffement de l'âme dans la zone d'étincelage.

L'enrobage 16 peut également contenir avantageusement du nickel, par exemple un alliage ternaire de cuivre, de zinc et de nickel, ou un alliage de cuivre et de nickel.

Dans le mode de réalisation de la figure 4, l'enrobage 16 comprend une pluralité de couches de métaux ou d'alliages différents susceptibles de se combiner entre elles lors de l'étincelle pour former un alliage commun. Par exemple, on peut utiliser une première couche interne 160 en alliage de cuivre et de nickel, une seconde couche 162 en cuivre, une troisième couche 163 en zinc, une quatrième couche 164 en un autre métal ou alliage.

Dans les deux modes de réalisation des figures 4 et 5, la couche superficielle 164 peut être constituée de l'un au moins des métaux du groupe constitué par le fer, le nickel, le cobalt, le chrome. La couche superficielle 164 peut être très mince, son épaisseur pouvant par exemple être d'environ 1 micron.

Pour l'obtention d'une électrode filiforme selon l'invention, on doit utiliser un procédé d'enrobage à froid d'une âme 15 en cuivre ou alliage de cuivre bonne conductrice de l'électricité. L'enrobage est réalisé par dépôt à froid de couches de métal ou d'alliage constituant l'enrobage définitif, et il faut éviter toute opération ultérieure d'échauffement de l'électrode. La désignation "dépôt à froid" signifie que le dépôt est effectué à une température suffisamment basse pour que les diffusions de métaux d'une couche à l'autre d'âme ou d'enrobage soient négligeables. Tel est le cas d'un dépôt intervenant à une température inférieure à 100 ° C.

Une amélioration des résultats a été constatée dans le cas où la proportion de métal accompagnant le cuivre contenue dans l'enrobage 16 est inférieure à 50 % en poids de l'enrobage.

Les couches d'enrobage peuvent être réalisées par dépôt chimique, ou peuvent être réalisées par dépôt électrolytique. Le dépôt électrolytique peut être préféré en particulier dans les modes de réalisation dans lesquels on veut contrôler la composition de l'enrobage.

Ainsi, pour réaliser une telle électrode selon la figure 2, on peut avantageusement faire passer un fil d'âme 15, par exemple en cuivre ou alliage de cuivre-zinc, dans un bain de galvanoplastie pour produire le dépôt électrolytique d'une couche de l'enrobage superficiel 16 en alliage de cuivre, selon une épaisseur et une teneur appropriées en métal accompagnant le cuivre.

Une première possibilité consiste à déposer directement un alliage de cuivre-zinc.

Une autre possibilité consiste à réaliser un co-dépôt des deux métaux cuivre et zinc sur l'âme 15.

Selon une variante avantageuse du procédé de l'invention, pendant l'étape de formation du dépôt électrolytique superficiel d'alliage sur l'âme 15, on fait varier de manière appropriée les paramètres électriques de l'opération de galvanoplastie en fonction du temps. De telles variations induisent une modulation dans la composition et dans la structure du dépôt d'alliage dans l'épaisseur de l'enrobage.

En particulier, on peut avantageusement faire passer dans le bain de galvanoplastie, entre les électrodes, un courant électrique de forme pulsée. La composition et la structure du dépôt d'alliage peuvent être modulées par réglage des paramètres de forme d'onde, tels que fréquence et rapport cyclique du courant électrique pulsé.

Selon l'invention, on cherche à réaliser un enrobage constitué d'un empilage de couches de métaux ou d'alliages différents. Les couches sont destinées à se combiner lors de l'étincelle électroérosive. Pour augmenter la rapidité de combinaison des couches lors de l'étincelle, on peut augmenter le nombre des couches formant l'enrobage, et diminuer simultanément leur épaisseur. L'invention permet de faciliter la réalisation d'un tel enrobage multicouche à couches nombreuses et fines. En effet, le dépôt chimique par déplacement, qui est le type de dépôt chimique approprié pour le dépôt des types de métaux ou d'alliages constituant l'enrobage selon l'invention, ne permet pas à lui-seul de réaliser des couches dont l'épaisseur est supérieure à un micron. Par ailleurs, la mise en oeuvre d'un dépôt électrolytique est plus complexe.

L'invention permet de surmonter ces difficultés en réalisant l'enrobage par une succession de dépôts électrolytiques et de dépôts chimiques effectués en alternance. Ainsi, on réalise par exemple une première couche de deux microns d'épaisseur par dépôt électrolytique, par passage dans un bain électrolytique ; on réalise ensuite un déplacement d'une partie du métal de la première couche et son remplacement par une seconde couche différente de un micron d'épaisseur maximum ; de même, on réalise une troisième couche par dépôt électrolytique, puis une quatrième couche par dépôt chimique et ainsi de suite.

On peut également utiliser une étape ultérieure de mise à dimension, par passage de l'électrode dans une filière. On obtient ainsi une électrode de diamètre parfaitement déterminé.

La présente invention n'est pas limitée aux modes de réalisation qui ont été explicitement décrits, mais elle en inclut les diverses variantes et généralisations contenues dans le domaine des revendications ci-après.

## Revendications (Revendications pour l'(les) Etat(s) contractant(s) suivant(s): SE, BE, LU, ES, GR, DK)

1. Electrode en forme de fil pour usinage par étincelage érosif, comprenant une âme métallique (15) en cuivre ou alliage de cuivre enrobée d'un enrobage métallique (16), dans laquelle :
- l'âme métallique (15) présente une composition sensiblement constante et homogène selon toute sa section, jusqu'à son interface (17) de liaison avec l'enrobage métallique (16), l'âme (15) étant dépourvue de zone de diffusion des métaux à l'interface (17) avec l'enrobage (16),
- l'électrode est dépourvue de couche barrière à l'interface entre l'âme métallique (15) et l'enrobage métallique (16),
- l'enrobage comprend plusieurs couches de métaux ou d'alliages différents (160, 162, 163, 164) susceptibles de se combiner entre elles lors de la fusion dans la zone d'étincelage pour former un alliage commun.

2. Electrode selon la revendication 1, caractérisée en ce que l'enrobage métallique (16) comprend un dépôt électrolytique d'un alliage composé de cuivre et de métal accompagnant le cuivre.

3. Electrode selon la revendication 2, caractérisée en ce que la proportion de métal accompagnant le cuivre contenue dans le dépôt électrolytique d'alliage est inférieure à 50 % en poids.

4. Electrode selon l'une quelconque des revendications 1 à 3, caractérisée en ce que l'enrobage (16) contient du zinc.

5. Electrode selon l'une quelconque des revendications 1 à 4, caractérisée en ce que l'enrobage (16) contient du nickel.

6. Electrode selon l'une quelconque des revendications 1 à 5, caractérisée en ce que l'enrobage (16) comprend une couche superficielle (161) constituée de l'un au moins des métaux du groupe comprenant le fer, le nickel, le cobalt, le chrome, réduisant l'adhérence des gouttes de métal en fusion sur l'enrobage.

7. Procédé de réalisation d'une électrode filiforme pour usinage par étincelage érosif selon l'une quelconque des revendications 1 à 6, caractérisé en ce que l'enrobage est réalisé par dépôt à froid, sur une âme (15) en cuivre ou alliage de cuivre, de plusieurs couches de métal ou d'alliage (16) différents constituant l'enrobage définitif, à l'exclusion de toute opération ultérieure d'échauffement susceptible de produire une diffusion des métaux entre l'enrobage et l'âme, les métaux ou alliages différents de l'enrobage étant susceptibles de se combiner entre eux lors de la fusion dans la zone d'étincelage pour former un alliage commun.

8. Procédé selon la revendication 7, caractérisé en ce que l'enrobage est réalisé par dépôt électrolytique en faisant passer un fil d'âme (15) dans un bain de galvanoplastie.

9. Procédé selon la revendication 8, caractérisé en ce que la composition du bain de galvanoplastie et les paramètres électrochimiques et électriques de l'étape de galvanoplastie sont choisis de manière que le dépôt électrolytique superficiel obtenu présente une épaisseur appropriée et une proportion en métal accompagnant le cuivre inférieure à 50 % en poids.

10. Procédé selon la revendication 9, caractérisé en ce que, pendant l'étape de production du dépôt électrolytique superficiel d'alliage, on fait varier les paramètres électriques dans le temps pour moduler la composition et la structure du dépôt dans l'épaisseur de l'enrobage.

11. Procédé selon la revendication 10, caractérisé en ce qu'on fait passer, dans le bain de galvanoplastie, un courant électrique de forme pulsée, et en ce que la composition et la structure du dépôt d'alliage sont modulés par réglage des paramètres de forme d'onde du courant électrique pulsé.

12. Procédé selon la revendication 7, caractérisé en ce que l'enrobage est réalisé par une succession de dépôts électrolytiques et de dépôts chimiques effectués en alternance, pour obtenir un empilage de nombreuses et fines couches de métaux ou d'alliages différents.

## Revendications (Revendications pour l'(les) Etat(s) contractant(s) suivant(s): AT, CH, DE, FR, GB, IT, LI, NL)

1. Electrode en forme de fil pour usinage par étincelage érosif, comprenant une âme métallique (15) en cuivre ou alliage de cuivre enrobée d'un enrobage métallique (16), dans laquelle :
- l'âme métallique (15) présente une composition sensiblement constante et homogène selon toute sa section, jusqu'à son interface (17) de liaison avec l'enrobage métallique (16), l'âme (15) étant dépourvue de zone de diffusion des métaux à l'interface (17) avec l'enrobage (16),
- l'électrode est dépourvue de couche barrière à l'interface entre l'âme métallique (15) et l'enrobage métallique (16),
- l'enrobage métallique (16) comprend un dépôt électrolytique d'un alliage composé de cuivre et de métal accompagnant le cuivre,
- l'enrobage comprend plusieurs couches de métaux ou d'alliages différents (160, 162, 163, 164) susceptibles de se combiner entre elles lors de la fusion dans la zone d'étincelage pour former un alliage commun,
- la proportion de métal accompagnant le cuivre contenue dans l'enrobage est inférieure à 50 % en poids.

2. Electrode selon la revendication 1, caractérisée en ce que l'enrobage (16) contient du zinc.

3. Electrode selon l'une des revendications 1 ou 2, caractérisée en ce que l'enrobage (16) contient du nickel.

4. Electrode selon l'une quelconque des revendications 1 à 3, caractérisée en ce que l'enrobage (16) comprend une couche superficielle (161) constituée de l'un au moins des métaux du groupe comprenant le fer, le nickel, le cobalt, le chrome, réduisant l'adhérence des gouttes de métal en fusion sur l'enrobage.

5. Procédé de réalisation d'une électrode filiforme pour usinage par étincelage érosif selon l'une quelconque des revendications 1 à 4, dans lequel la réalisation de l'enrobage comprend au moins une étape de dépôt électrolytique à froid, sur une âme (15) en cuivre ou alliage de cuivre, d'au moins une couche de métal ou d'alliage (16) constituant l'enrobage définitif, à l'exclusion de toute opération ultérieure d'échauffement susceptible de produire une diffusion des métaux entre l'enrobage et l'âme,
la proportion en métal accompagnant le cuivre dans l'enrobage étant inférieure à 50% en poids.

6. Procédé selon la revendication 5, caractérisé en ce que, pendant l'étape de production du dépôt électrolytique superficiel d'alliage, on fait varier les paramètres électriques dans le temps pour moduler la composition et la structure du dépôt dans l'épaisseur de l'enrobage.

7. Procédé selon la revendication 6, caractérisé en ce qu'on fait passer, dans le bain de galvanoplastie, un courant électrique de forme pulsée, et en ce que la composition et la structure du dépôt d'alliage sont modulés par réglage des paramètres de forme d'onde du courant électrique pulsé.

8. Procédé selon la revendication 5, caractérisé en ce que l'enrobage est réalisé par une succession de dépôts électrolytiques et de dépôts chimiques effectués en alternance, pour obtenir un empilage de nombreuses et fines couches de métaux ou d'alliages différents.

## Patentansprüche (Patentansprüche für folgende(n) Vertragsstaat(en): SE, BE, LU, ES, GR, DK)

1. Drahtförmige Elektrode für eine Verarbeitung durch Funkenerosion, mit einer Metallseele (15) aus Kupfer oder einer Kupferlegierung, die mit einer Metallhülle (16) umhüllt ist, bei welcher:
- die Metallseele (15) eine im wesentlichen konstante und homogene Zusammensetzung über ihren gesamten Querschnitt hat bis hin in ihre Verbindungs-Grenzfläche (17) mit der Metallhülle (16), wobei die Seele (15) an der Grenzfläche (17) mit der Hülle (16) frei von einer Diffusionszone der Metalle ist,
- die Elektrode frei von einer Sperrschicht ist an der Grenzfläche zwischen der Metallseele (15) und der Metallumhüllung (16),
- die Umhüllung mehrere Schichten aus verschiedenen Metallen oder Legierungen (160, 162, 163, 164) aufweist, die sich bei der Schmelzung in der Funkenzone untereinander kombinieren lassen, um eine gemeinsame Legierung zu bilden.

2. Elektrode nach Anspruch 1, dadurch gekennzeichnet, daß
- die Metallumhüllung (16) einen elektrolytischen Niederschlag einer Legierung aufweist, die aus Kupfer und das Kupfer begleitendem Metall besteht.

3. Elektrode nach Anspruch 2, dadurch gekennzeichnet, daß
- der Anteil des Metalls, welches das in dem elektrolytischen Niederschlag enthaltene Kupfer begleitet, weniger als 50 Gew.-% beträgt.

4. Elektrode nach einem der Ansprüche 1 bis 3, dadurch gekennzeichnet, daß die Umhüllung (16) Zink enthält.

5. Elektrode nach einem der Ansprüche 1 bis 4, dadurch gekennzeichnet, daß die Umhüllung (16) Nickel enthält.

6. Elektrode nach einem der Ansprüche 1 bis 5, dadurch gekennzeichnet, daß die Umhüllung (16) eine Oberflächenschicht (161) aufweist, die aus wenigstens einem Metall der Gruppe besteht, enthaltend Eisen, Nickel, Kobalt, Chrom, um die Haftung der schmelzflüssigen Metalltropfen an der Umhüllung zu verringern.

7. Verfahren zur Herstellung einer drahtförmigen Elektrode für eine Verarbeitung durch Funkenerosion nach einem der Ansprüche 1 bis 6, dadurch gekennzeichnet, daß die Umhüllung durch einen kalten Niederschlag auf einer Seele (15) aus Kupfer oder einer Kupferlegierung von mehreren Schichten aus unterschiedlichen Metallen oder Legierungen (16) durchgeführt wird, welche die endgültige Umhüllung ausbilden, unter Ausschluß jeder nachfolgenden Wärmeeinwirkung, die geeignet ist, eine Diffusion der Metalle zwischen der Umhüllung und der Seele zu erzeugen, wobei die unterschiedlichen Metalle oder Legierungen der Umhüllung dafür geeignet sind, sich untereinander in der Funkenzone zu kombinieren, um eine gemeinsame Legierung zu bilden.

8. Verfahren nach Anspruch 7, dadurch gekennzeichnet, daß die Umhüllung durch einen elektrolytischen Niederschlag bewirkt wird, indem eine Drahtseele (15) durch ein Elektroplattierungsbad hindurchgeführt wird.

9. Verfahren nach Anspruch 8, dadurch gekennzeichnet, daß die Zusammensetzung des Elektroplattierungsbades und die elektrochemischen und elektrischen Parameter der Stufe der Elektroplattierung derart gewählt sind, daß der an der Oberfläche erhaltene elektrolytische Niederschlag eine geeignete Dicke und einen Anteil an dem das Kupfer begleitenden Metall von weniger als 50 Gew.-% hat.

10. Verfahren nach Anspruch 9, dadurch gekennzeichnet, daß während der Stufe der Erzeugung des elektrolytischen Niederschlags der Legierung an der Oberfläche die elektrischen Parameter in der Zeit verändert werden, um die Zusammensetzung und die Struktur des Niederschlages in der Dicke der Umhüllung zu modulieren.

11. Verfahren nach Anspruch 10, dadurch gekennzeichnet, daß man durch das Elektroplattierungsbad einen pulsierenden elektrischen Strom hindurchgehen läßt und daß die Zusammensetzung und die Struktur des Legierungsniederschlages durch eine Regelung der Parameter der Wellenform des pulsierenden elektrischen Stromes moduliert werden.

12. Verfahren nach Anspruch 7, dadurch gekennzeichnet, daß die Umhüllung durch eine abwechselnd bewirkte Aufeinanderfolge elektrolytischer Niederschläge und chemischer Niederschläge durchgeführt wird, um eine Schichtung von zahlreichen und feinen Schichten aus Metallen oder verschiedenen Legierungen zu erhalten.

## Patentansprüche (Patentansprüche für folgende(n) Vertragsstaat(en): AT, CH, DE, FR, GB, IT, LI, NL)

1. Drahtförmige Elektrode für eine Verarbeitung durch Funkenerosion, mit einer Metallseele (15) aus Kupfer oder einer Kupferlegierung, die mit einer Metallhülle (16) umhüllt ist, bei welcher:
- die Metallseele (15) eine im wesentlichen konstante und homogene Zusammensetzung über ihren gesamten Querschnitt hat bis hin in ihre Verbindungs-Grenzfläche (17) mit der Metallhülle (16), wobei die Seele (15) an der Grenzfläche (17) mit der Hülle (16) frei von einer Diffusionszone der Metalle ist,
- die Elektrode frei von einer Sperrschicht ist an der Grenzfläche zwischen der Metallseele (15) und der Metallumhüllung (16),
- die Metallumhüllung (16) einen elektrolytischen Niederschlag einer Legierung aufweist, die aus Kupfer und das Kupfer begleitendem Metall besteht,
- die Umhüllung mehrere Schichten aus verschiedenen Metallen oder Legierungen (160, 162, 163, 164) aufweist, die sich bei der Schmelzung in der Funkenzone untereinander kombinieren lassen, um eine gemeinsame Legierung zu bilden,
- der Anteil des Metalls, welches das in der Umhüllung enthaltene Kupfer begleitet, weniger als 50 Gew.-% beträgt.

2. Elektrode nach Anspruch 1, dadurch gekennzeichnet, daß die Umhüllung (16) Zink enthält.

3. Elektrode nach einem der Ansprüche 1 oder 2, dadurch gekennzeichnet, daß die Umhüllung (16) Nickel enthält.

4. Elektrode nach einem der Ansprüche 1 bis 3, dadurch gekennzeichnet, daß die Umhüllung (16) eine Oberflächenschicht (161) aufweist, die aus wenigstens einem Metall der Gruppe besteht, enthaltend Eisen, Nickel, Kobalt, Chrom, um die Haftung der schmelzflüssigen Metalltropfen an der Umhüllung zu verringern.

5. Verfahren zur Herstellung einer drahtförmigen Elektrode für eine Verarbeitung durch Funkenerosion nach einem der Ansprüche 1 bis 4, bei welchem die Herstellung der Umhüllung wenigstens eine Stufe eines kalten elektrolytischen Niederschlags auf einer Seele (15) aus Kupfer oder einer Kupferlegierung wenigstens einer Schicht aus Metall oder einer Legierung (16) umfaßt, welche die endgültige Umhüllung ausbildet, unter Ausschluß jeder nachfolgenden Wärmeeinwirkung, die geeignet ist, eine Diffusion der Metalle zwischen der Umhüllung und der Seele zu erzeugen, wobei der Anteil an Metall, welches das Kupfer in der Umhüllung begleitet, weniger als 50 Gew.-% beträgt.

6. Verfahren nach Anspruch 5, dadurch gekennzeichnet, daß während der Stufe der Erzeugung des elektrolytischen Niederschlags der Legierung an der Oberfläche die elektrischen Parameter in der Zeit verändert werden, um die Zusammensetzung und die Struktur des Niederschlages in der Dicke der Umhüllung zu modulieren.

7. Verfahren nach Anspruch 6, dadurch gekennzeichnet, daß man durch das Elektroplattierungsbad einen pulsierenden elektrischen Strom hindurchgehen läßt,und daß die Zusammensetzung und die Struktur des Legierungsniederschlages durch eine Regelung der Parameter der Wellenform des pulsierenden elektrischen Stromes moduliert werden.

8. Verfahren nach Anspruch 5, dadurch gekennzeichnet, daß die Umhüllung durch eine abwechselnd bewirkte Aufeinanderfolge elektrolytischer Niederschläge und chemischer Niederschläge durchgeführt wird, um eine Schichtung von zahlreichen und feinen Schichten aus Metallen oder verschiedenen Legierungen zu erhalten.

## Claims (Claims for the following Contracting State(s): SE, BE, LU, ES, GR, DK)

1. Wire-shaped electrode for machining by spark erosion, comprising a metal core (15) made from copper or a copper alloy coated with a metal coating (16), wherein :
- the metal core (15) has a substantially constant and homogeneous composition over the whole of its cross section, as far as its connecting interface (17) with the metal coating (16), the core (15) being free of any zone of metal diffusion at the interface (17) with the coating (16),
- the electrode is free of any barrier at the interface between the metal core (15) and the metal coating (16),
- the coating comprises several layers of different metals or alloys (160, 162, 163, 164) able to combine with each other during fusion in the sparking zone so as to form a common alloy.

2. Electrode according to claim 1, characterized in that the metal coating (16) comprises an electrolytic deposit of copper alloy and metal accompanying the copper.

3. Electrode according to claim 2, characterized in that the proportion of metal accompanying the copper contained in the electrolytic deposit is less than 50 % by weight.

4. Electrode according to any one of claims 1 to 3, characterized in that the coating (16) contains zinc.

5. Electrode according to any one of claims 1 to 4, characterized in that the coating (16) contains nickel.

6. Electrode according to any one of claims 1 to 5, characterized in that the coating (16) comprises a surface layer (161) formed of one at least of the metals from the group comprising iron, nickel, cobalt and chromium, reducing the adherence of the molten metal drops on the coating.

7. Method of forming a filiform electrode for machining by spark erosion according to any one of claims 1 to 6, characterized in that the coating is formed by cold deposition, on a copper or copper alloy core (15), of several metal or alloy layers (16) forming the final coating, excluding any subsequent heating operation likely to cause diffusion of the metals between the coating and the core, the different metals or alloys being likely to combine with each other during fusion in the sparking zone so as to form a common alloy.

8. Method according to claim 7, characterized in that the coating is formed by electrolytic deposition by causing a core wire (15) to pass through a galvanoplasty bath.

9. Method according to claim 8, characterized in that the composition of the galvanoplasty bath and the electro-chemical and electric parameters of the galvanoplasty step are chosen so that the surface electrolytic deposition obtained has an appropriate thickness and a proportion of metal accompanying the copper less than 50 % by weight.

10. Method according to claim 9, characterized in that, during the step of formation of the surface electrolytic alloy deposit, the electric parameters are varied in time so as to modulate the composition and the structure of the deposit in the thickness of the coating.

11. Method according to claim 10, characterized in that a pulsed electric current is caused to pass through the galvanoplasty bath and in that the composition and structure of the alloy deposit are modulated by adjusting the waveform parameters of the pulsed electric current.

12. Method according to claim 7, characterized in that the coating is formed by a succession of electrolytic depositions and chemical depositions made alternately, so as to obtain a stack of numerous fine layers of different metals or alloys.

## Claims (Claims for the following Contracting State(s): AT, CH, DE, FR, GB, IT, LI, NL)

1. Wire-shaped electrode for machining by spark erosion, comprising a metal core (15) made from copper or a copper alloy coated with a metal coating (16), wherein :
- the metal core (15) has a substantially constant and homogeneous composition over the whole of its cross section, as far as its connecting interface (17) with the metal coating (16), the core (15) being free of any zone of metal diffusion at the interface (17) with the coating (16),
- the electrode is free of any barrier at the interface between the metal core (15) and the metal coating (16),
- the metal coating (16) comprises an electrolytic deposit of copper alloy and metal accompanying the copper,
- the coating comprises several layers of different metals or alloys (160, 162, 163, 164) able to combine with each other during fusion in the sparking zone so as to form a common alloy,
- the proportion of metal accompanying the copper contained in the coating is less than 50 % by weight.

2. Electrode according to claim 1, characterized in that the coating (16) contains zinc.

3. Electrode according to any one of claims 1 or 2, characterized in that the coating (16) contains nickel.

4. Electrode according to any one of claims 1 to 3, characterized in that the coating (16) comprises a surface layer (161) formed of one at least of the metals from the group comprising iron, nickel, cobalt and chromium, reducing the adherence of the molten metal drops on the coating.

5. Method of forming a filiform electrode for machining by spark erosion according to any one of claims 1 to 4, wherein the coating is formed by at least one step of cold electrolytic deposition, on a copper or copper alloy core (15), of at least one metal or alloy layer (16) forming the final coating, excluding any subsequent heating operation likely to cause diffusion of the metals between the coating and the core, the proportion of metal accompanying the copper in the coating being less than 50 % by weight.

6. Method according to claim 5, characterized in that, during the step of formation of the surface electrolytic alloy deposit, the electric parameters are varied in time so as to modulate the composition and the structure of the deposit in the thickness of the coating.

7. Method according to claim 6, characterized in that a pulsed electric current is caused to pass through the galvanoplasty bath and in that the composition and structure of the alloy deposit are modulated by adjusting the waveform parameters of the pulsed electric current.

8. Method according to claim 5, characterized in that the coating is formed by a succession of electrolytic depositions and chemical depositions made alternately, so as to obtain a stack of numerous fine layers of different metals or alloys.
